# EUROPÄISCHE PATENTSCHRIFT

(11) **EP 3 184 483 B1**
(45) Veröffentlichungstag und Bekanntmachung des Hinweises auf die Patenterteilung: **12.12.2018**
(21) Anmeldenummer: 16002697.7
(22) Anmeldetag: 20.12.2016
(51) Int. Cl.: B66F 9/07, B65G 1/04

(54) **REGALBEDIENGERÄT FÜR EIN LAGERREGAL**
SHELVING DEVICE FOR A STORAGE SHELF
APPAREIL DE COMMANDE D'UNE ÉTAGÈRE DE STOCKAGE

(30) Priorität: 23.12.2015 DE 102015016813
(43) Veröffentlichungstag der Anmeldung: 28.06.2017
(73) Patentinhaber: Stock, Bernhard, 63589 Linsengericht (DE)
(72) Erfinder: Stock, Bernhard, 63589 Linsengericht (DE)
(74) Vertreter: Körner, Volkmar Horst

(56) Entgegenhaltungen:
- CN-A- 104 973 375
- DE-A1- 3 332 196
- DE-A1-102014 003 451
- US-A1- 2012 034 054

## Beschreibung

Die Erfindung betrifft ein Regalbediengerät für ein Lagerregal, insbesondere eines automatischen Hochregallagers oder Kleinteilelagers, mit einem Mast, mit einem auf dem Mast angeordneten Lastaufnahmemittel, mit einer Antriebseinrichtung zur Bewegung der Lastaufnahmemittel zu verschiedenen Positionen an dem Lagerregal.

Ein solches Regalbediengerät ist beispielsweise aus der DE 10 2014 003 451 A1 bekannt. Bei diesem Regalbediengerät ist mit definiertem Abstand zum Boden unmittelbar am Lagerregal eine horizontale Fahrschiene angebracht. Auf der Fahrschiene ist ein Fahrwerk mittels Antriebseinrichtung verfahrbar. Das Fahrwerk trägt einen in vertikaler Richtung verfahrbaren Mastabschnitt mit einer Lastaufnahme zum Aufnehmen und Abgeben von Stückgütern. Ein Vorteil dieses Regalbediengeräts besteht darin, dass eine Lagergasse vor dem Lagerregal frei von Fahrschienen gehalten ist und sich der Wirkbereich der Regalbediengeräte überschneiden kann

Nachteilig bei dem bekannten Regalbediengerät ist jedoch, dass die Umschlagsleistung durch Ausweichbewegungen der Lastaufnahmemittel im Überschneidungsbereich reduziert wird und dass im Betrieb das gesamte Fahrwerk mit der gesamten Masse des Mastes entlang den am Regal befestigten Schienen verfahren werden muss.

Aus der WO 96/15963 A1 ist ein Gerät bekannt, bei dem ein Greifarm auf einer Schiene verfahrbar ist. Mit diesem Gerät können jedoch nur geringe Lasten transportiert werden.

Aus DE 37 39 136 A1 ist ein Regalbediengerät mit einem vertikalen Mast bekannt. Der Mast ist verfahrbar auf Laufschienen und Führungsschienen angeordnet. Nachteilig bei diesem Regalbediengerät ist, dass der vertikale Mast bei hoher Dynamik zu einem Kippen und Verkanten führt.

Aus der DE 20 2004 002 337 U1 ist ein Knickmast mit vertikaler Normallage bekannt. Die Bedienung übereinander angeordneter Regalebenen erfolgt über aufwändig gestaltete Lifte.

Die DD 270 259 A1 offenbart ein Speicher- und Fördersystem, bei dem ein Teleskoparm eine Gutaufnahmevorrichtung trägt. Zum Entnehmen eines Gutes aus einem Hochregalspeicher wird der gesamte Teleskoparm vor dem Hochregalspeicher verfahren. Das Fördersystem benötigt damit einen sehr großen Bauraum vor dem Hochregalspeicher.

Die DE 30 17 164 A1 offenbart eine Lastaufnahmevorrichtung für Regalstapelfahrzeuge. Die Bewegung nur geringer Massen verbessert die Feinpositionierung von Lastaufnahmemitteln. Das Grundfahrzeug bleibt hierbei in Ruhe und lediglich die Lastaufnahmevorrichtung am Mastschlitten wird bewegt. Hierzu werden Lastaufnahmeträger in allen Richtungen verschiebbar gelagert, eine parallel zur Achse des Hubgerüstes verlaufende Achse lässt auch ein Verschwenken zu.

Die DE 297 07 402 U1 offenbart ein Regalbediengerät für ein Hochregallager. Ein Fahrwagen mit Schwenkmasten und daran angeordneten Pendelauslegern verfahren längs von Führungsbahnen.

Die DE 33 32 196 A1 offenbart eine Vorrichtung zur automatischen Entnahme von Gegenständen aus Behältern. Die Vorrichtung hat einen schwenkbaren Entnahmearm und eine Einrichtung zum axialen Vor- und Zurückfahren des Entnahmearms. Eine Halterung für den Entnahmearm lässt sich in einer vertikalen Ebene verfahren.
Dynamisch wirkende Lager, ergeben beim Einsatz von Shuttlebediengeräten nur wenige, vertikal übereinander angeordnete Regalebenen. Die Ebenen müssen über Lifte erschlossen werden. Bei marktüblichen Lagerkapazitätserfordernissen sind lange Lagergassen und somit lange Fahrwege der Bediengeräte mit ungünstigen Andienzeiten zu erwarten. Die Leistungsfähigkeit eines Systems wird jedoch durch die Gesamtandienzeit der Stückgüter an den Bearbeitungsorten bestimmt.

Der Erfindung liegt das Problem zugrunde, ein Regalbediengerät der eingangs genannten Art so weiter zu bilden, dass es eine besonders hohe Leistungsfähigkeit hat, besonders einfach aufgebaut ist, den umbauten Raum bestmöglich nutzt und eine besonders vielseitige Einsetzbarkeit bei unterschiedlich gestalteten Lagerregalen ermöglicht.

Dieses Problem wird erfindungsgemäß dadurch gelöst, dass der Mast auf einem feststehenden Sockel schwenkbar gelagert ist und die Antriebseinrichtung zur Verschwenkung des Mastes ausgebildet ist und dass die Lastaufnahmemittel entlang des Mastes verfahrbar sind, während der Mast gleichzeitig verschwenkbar ist.

Durch diese Gestaltung kann der Sockel fest in der Lagergasse, zwischen zwei Lagerregalen, montiert sein.

Der Abstand zwischen zwei Lagerregalen wird dabei durch die Dimension der zu lagernden Stückgüter oder des Lastaufnahmemittels bestimmt. Fahrschienen in der Lagergasse zur Verschiebung des Mastes lassen sich hierdurch einfach vermeiden. Da der Mast dank der Erfindung besonders gering gehalten. Weiterhin kann das Lagerregal sehr hoch gebaut sein, da sich der Mast beliebig zwischen horizontalen und vertikalen Lagen verschwenken lässt und der Sockel an geeigneter Position montiert werden kann. Das Regalbediengerät ist daher für unterschiedlich gestaltete Lagerregale und Einflüsse durch angrenzende, störende Gebäudekonturen sowie Einbauten in der Lagergasse geeignet. Eine besonders hohe Geschwindigkeit bei der Ansteuerung der verschiedenen Positionen im Lagerregal wird erreicht, weil die Lastaufnahmemittel entlang des Mastes verfahrbar sind. Durch diese Gestaltung lässt sich das Lastaufnahmemittel im günstigsten Fall längs des Mastes verfahren, während dieser gleichzeitig verschwenkt wird.

Die Übergabe der Stückgüter zwischen dem Bediengerät und einer Transporteinrichtung gestaltet sich gemäß einer anderen vorteilhaften Weiterbildung der Erfindung besonders einfach, wenn in unmittelbarer Nähe des Sockels eine Übergabestation zum Transport von Stückgütern von dem Lagerregal weg oder zu diesem hin angeordnet ist. Solche Transporteinrichtungen zur Versorgung von Bearbeitungsorten dienen dem Abtransport oder Zutransport der Stückgüter gegenüber dem Lagerregal und sind in vielfältigen Ausführungen beispielsweise aus der DE 10 2013 019 526 A1 oder der DE 10 2009 058 125 A1 bekannt.

Zur weiteren Erhöhung der Geschwindigkeit der Ansteuerung der verschiedenen Positionen im Lagerregal trägt es gemäß einer anderen vorteilhaften Weiterbildung der Erfindung bei, wenn der Mast gegeneinander verschiebbare Mastteile hat. Ein weiterer Vorteil dieser Gestaltung besteht darin, dass hierdurch das Regalbediengerät auch bei Lagerregalen eingesetzt werden kann, bei denen verschiedene Positionen beispielsweise wegen einschränkenden Gebäudeformen oder Bauten als Störkontur vor dem Lagerregal umfahren werden müssen. Das freie Ende des Mastes lässt sich durch diese Gestaltung bei Bedarf einfach zurückziehen und wieder ausfahren. Im einfachsten Fall sind die Mastteile teleskopartig verschiebbar. Alternativ dazu kann auch eines der Mastteile schlittenartig über das andere Mastteil bewegbar sein. Vorzugsweise verschiebt sich das Mastteil in Richtung der Übergabestation der Stückgüter, während der Mast gleichzeitig verschwenkt wird. Dies trägt zur besonders hohen Transportgeschwindigkeit bei.

Der Mast hat gemäß einer anderen vorteilhaften Weiterbildung der Erfindung eine besonders hohe Stabilität, wenn der Mast zwei in einem Parallelogramm parallel zueinander angeordnete Mastteile hat. Selbstverständlich können die parallel zueinander angeordneten Mastteile sich aus weiteren, zueinander verschiebbaren Mastteilen zusammensetzen.

Zur weiteren Erhöhung der Geschwindigkeit der Ansteuerung der verschiedenen Positionen im Lagerregal trägt es gemäß einer anderen vorteilhaften Weiterbildung der Erfindung bei, wenn der Mast und die verschiebbaren Mastteile Transportbänder zum kontinuierlichen Transport der Stückgüter aufweisen.

Der Sockel lässt sich gemäß einer anderen vorteilhaften Weiterbildung der Erfindung platzsparend an einem Ende einer Lagergasse anordnen, wenn die schwenkbare Lagerung nahe oder an einem Ende des Mastes angeordnet ist. Durch diese Gestaltung lassen sich die Lastaufnahmemittel auf einer Seite des Sockels anordnen. Auf der den Lastaufnahmemitteln abgewandten Seite des Mastes kann beispielsweise ein Gegengewicht angeordnet sein. Die Vorrichtung zur seitlichen Führung der Lastaufnahmemittel in der Lagergasse gestaltet sich dabei konstruktiv besonders einfach, wenn die schwenkbare Lagerung des Sockels mindestens die Lagergassenbreite zur stabilen Mastausrichtung nutzt.

Ein Gegengewicht zu dem den Lastaufnahmemitteln abstützenden Bereich des Mastes lässt sich gemäß einer anderen vorteilhaften Weiterbildung der Erfindung einfach vermeiden, wenn die schwenkbare Lagerung in einem mittleren Bereich des Mastes angeordnet ist. Im einfachsten Fall lassen sich die Lastaufnahmemittel über die Lagerung des Mastes verfahren. Durch diese Gestaltung ist der Mast mittig geführt, was zu einer besonders hohen Stabilität beiträgt.

Zur weiteren Erhöhung der Geschwindigkeit bei der Ansteuerung der verschiedenen Positionen am Lagerregal trägt es gemäß einer anderen vorteilhaften Weiterbildung der Erfindung bei, wenn zumindest zwei Masten für unterschiedliche Bereiche des Lagerregals vorgesehen sind.

Das Regalbediengerät gestaltet sich gemäß einer anderen vorteilhaften Weiterbildung der Erfindung besonders kostengünstig, wenn die zumindest zwei Masten auf einem gemeinsamen Sockel gelagert sind.

Der Transport von Stückgütern von dem Lagerregal weg und zu diesem hin erfolgt gemäß einer anderen vorteilhaften Weiterbildung der Erfindung mit einer besonders hohen Geschwindigkeit, wenn die zumindest zwei Masten auf einander gegenüberliegenden Sockeln gelagert sind.

Die Lastaufnahmemittel lassen sich gemäß einer anderen vorteilhaften Weiterbildung der Erfindung besonders schnell und präzise positionieren, wenn die Masten zu ihrer Verschwenkung über Zugmittel mit einer Antriebseinrichtung verbunden sind.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: ein Regalbediengerät mit einem einzelnen Mast vor einem Lagerregal,
- Fig.1a: vergrößert einen Querschnitt durch einen Mast des Regalbediengerätes aus Figur 1,
- Fig.2: ein Regalbediengerät mit zwei auf einem gemeinsamen Sockel gelagerten Masten,
- Fig.3: ein Regalbediengerät mit parallelogrammartigen und einander gegenüberliegend gelagerten Masten,
- Fig.4: ein Regalbediengerät mit einem mittig gelagerten Mast,
- Fig.5: ein Regalbediengerät mit mittig gelagertem Mast und mehreren unabhängig verschiebbaren Lastaufnahmemitteln,
- Fig.6: ein Regalbediengerät mit zwei auf einem gemeinsamen Sockel gelagerten Masten und mehreren unabhängig verschiebbaren Lastaufnahmemitteln.

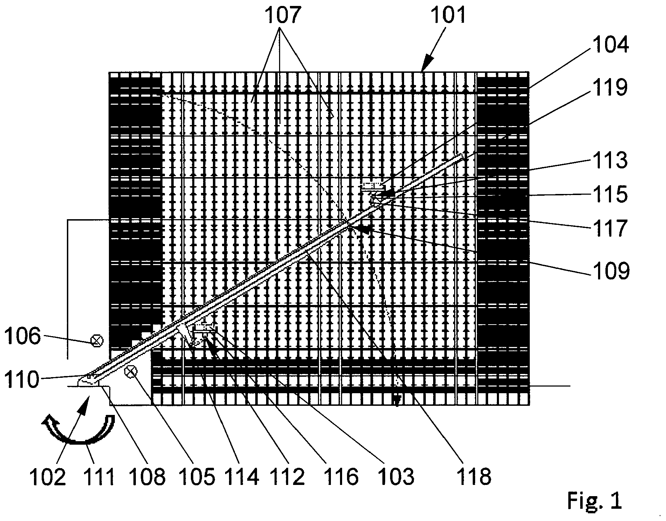

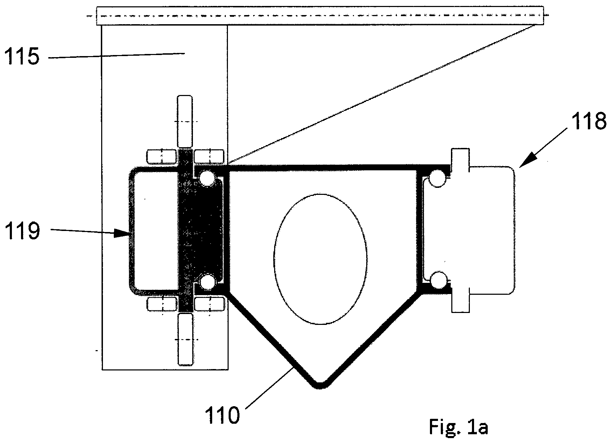

Figur 1 zeigt ein Lagerregal 101, insbesondere ein automatisches Kleinteilelager oder Hochregallager, mit einem Regalbediengerät 102 zum Zu- oder Abtransport von Stückgütern 103, 104 zu zwei beispielhaft dargestellten Übergabestationen 105, 106. Das vor dem Regalbediengerät 102 und damit vor der Zeichenebene angeordnete Lagerregal ist zur Vereinfachung der Zeichnung nicht dargestellt. Die Übergabestationen 105, 106 können beliebige Fördereinrichtungen, wie beispielsweise Bodenbahnen, Stetigförderer oder Senkrechtförderer sein. In dem Lagerregal 101 befinden sich an verschiedenen Positionen Regalfächer 107, in denen verschiedene Stückgüter gelagert sind.

Das Regalbediengerät 102 hat einen feststehenden Sockel 108, auf dem ein Mast 109 schwenkbar gelagert ist. Die Lagerung erfolgt an einem Ende des Mastes 109. Eine nicht näher dargestellte Antriebseinrichtung 111 dient zur Verschwenkung des Mastes 109 und zur Bewegung von Lastaufnahmemitteln 112, 113, welche die Stückgüter 103, 104 zwischen den Regalfächern 107 und den Übergabestationen 105, 106 transportieren. Die Lastaufnahmemittel 112, 113 weisen längs des Mastes 109 verfahrbare Lastaufbauten 114, 115 und in die Regalfächer 107 einfahrbare Lastschlitten 116, 117 auf. Der Mast 109 setzt sich aus einem schwenkbaren Mastteil 110 und zwei seitlichen, teleskopartig und unabhängig verschiebbaren Mastteilen 118, 119 zusammen. Die verschiebbaren Mastteile 118, 119 werden ebenfalls von der Antriebseinrichtung 111 angetrieben. Zur Verschwenkung des Mastes 109, dem Verschieben der Mastteile 118, 119 und der Bewegung der Lastaufnahmemittel 112, 113 kann die Antriebseinrichtung beispielsweise mehrere Elektromotoren oder dergleichen aufweisen, die sich für eine besonders hohe Transportgeschwindigkeit der Stückgüter zeitgleich ansteuern lassen, so dass sich die Bewegungen des Mastes, der Mastteile und der Lastaufnahmemittel überlagern. Der Mast 109 verschwenkt in einer so genannten Lagergasse vor dem Lagerregal 101, zwischen zwei Lagerregalen, über mit einem Pfeil gekennzeichnetem Kreisbogen.

Figur 1a zeigt einen Querschnitt durch den Mast 109 des Regalbediengerätes 102 aus Figur 1 im Überlappungsbereich der drei Mastteile 110, 118, 119. Das schwenkbare Mastteil 110 führt auf jeder Seite eines der verschiebbaren Mastteile 118, 119. Die Mastteile haltern die Lastaufbauten 114, 115, von denen in der Zeichnung nur eine dargestellt ist.

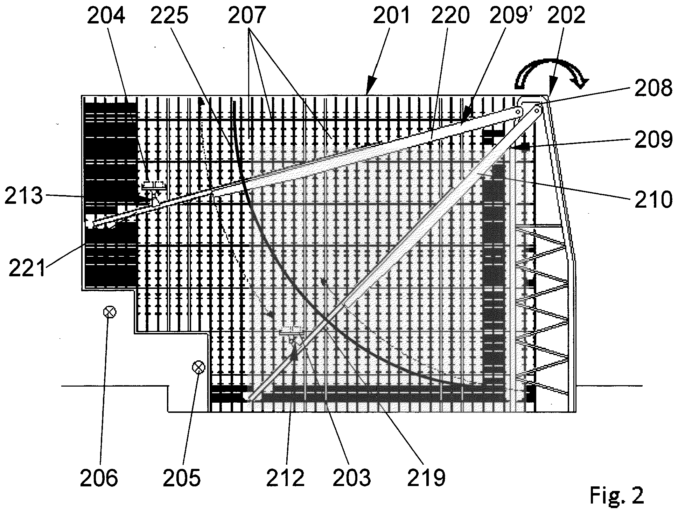

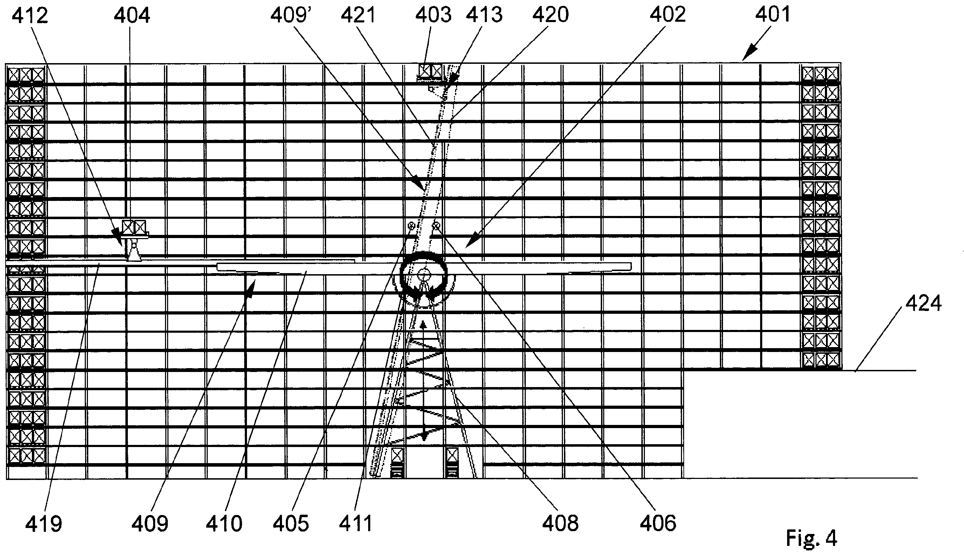

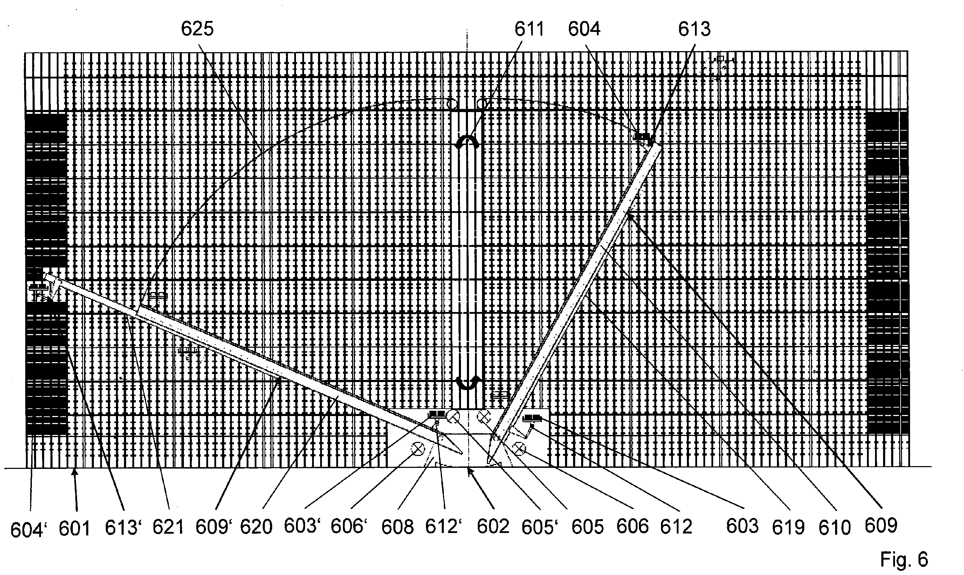

Figur 2 zeigt ein Lagerregal 201 mit einem Regalbediengerät 202, bei dem auf einem Sockel 208 zwei Masten 209, 209' schwenkbar gelagert sind. Jeder der Masten 209, 209' hat zwei teleskopartig verschiebbare Mastteile 210, 219 und 220, 221 und jeweils ein Lastaufnahmemittel 212, 213. Die Lastaufnahmemittel 212, 213 sind wie in Figur 4 beschrieben aufgebaut. Die Masten 220, 210 verschwenken über unterschiedliche Bereiche des Lagerregals 201, welche jeweils mit einem Pfeil gekennzeichnet sind. Auf der dem Sockel 208 diagonal gegenüberstehenden Ecke des Lagerregals 201 sind Übergabestationen 205, 206 zur Übergabe der Stückgüter 203, 204 angeordnet. In der Lagergasse abgespannte Seile 225 werden in regelmäßigen Abständen geführt und stehen mit den Masten 209, 209' seitlich in Verbindung. Diese Seile 225 können auch als Zugseile und somit zum Schwenken der Maste 209, 209' ausgelegt werden. Für den Fachmann versteht sich, dass diese Darstellung auch nur einen Lagerausschnitt darstellen kann und eine Spiegelung des Systems über die lotrechte Sockelachse und/oder die Lagerregaloberkante wie in Figur 6 möglich ist und sich somit eine weitere Alternative den Fig. 4, 5 und 6 entsprechend darstellen lässt.

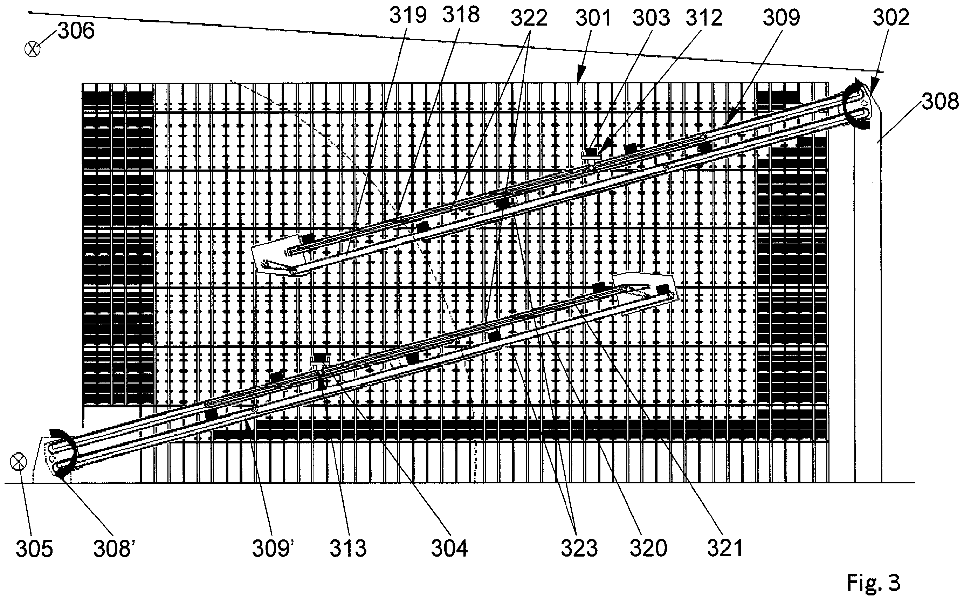

Figur 3 zeigt eine weitere Ausführungsform eines Regalbediengerätes 302 mit zwei diagonal gegenüberliegend angeordneten Sockeln 308, 308'. Die Sockel 308, 308' lagern jeweils einen parallelogrammartig gestalteten Mast 309, 309'. Die Masten 309, 309' weisen hierfür parallel angeordnete, obere und untere Mastteile, mit jeweils in Verlängerung seitlich verschiebbaren Mastteilen 318 - 321 auf. Die Masten 309, 309' weisen zudem im oberen und unteren Mastteil durchgängig Transportbänder 322, 323 auf, die Stückgüter werden kontinuierlich zu und von den Übergabestation 305, 306 transportiert. Lastaufnahmemittel 312, 313 sind entlang der verschiebbaren Mastteile beweglich. Die Lastaufnahmemittel 312, 313 sind mit in die Regalfächer einfahrbaren und an die Transportbänder übergebenden Lastschlitten 303, 304 ausgestattet. Die Übergabestation 305 ist unmittelbar an dem Sockel 308' angeordnet. In dem Lagerregal montierte, seitliche Führungen stehen mit den Masten in Verbindung. Die Übergabestation 305 ist unmittelbar am Sockel 308' angeordnet. Der Mast 309 kann zur Übergabe der Stückgüter nahe Sockel 308 abgeben oder mit den verschiebbaren Mastteilen 318, 319 an der beispielhaft eingezeichneten Übergabestation 306 koppeln.

Figur 4 zeigt ein Lagerregal 401, insbesondere ein automatisches Hochregallager oder Kleinteilelager mit einem Regalbediengerät 402 mit einem auf einem Sockel 408 gelagerten Mast 409 in einer Lagergasse. Die Lagergasse trennt zwei Lagerregale 401, von denen das hinter dem Regalbediengerät 402 angeordnete Lagerregal 401 dargestellt ist. Das vor dem Regalbediengerät 402 und damit vor der Zeichenebene angeordnete Lagerregal und zugehörige Übergabestationen und sind zur Vereinfachung der Zeichnung nicht dargestellt. Der Mast 409 dient zur Bedienung des dargestellten Lagerregals 401 und des vor der Zeichenebene nicht dargestellten Lagerregals. Der Mast 409 hat mindestens zwei Mastteile 410, 419, von denen ein erstes Mastteil 410 mittig gelagert ist. Das zweite Mastteil 419 ist auf dem ersten Mastteil 410 verfahrbar angeordnet und trägt bereits das in Figur 2 beschriebene Lastaufnahmemittel 412. Eine schematisch dargestellte Antriebseinrichtung 411 verschwenkt das erste Mastteil 410. Weitere Antriebseinrichtungen verfahren das zweite Mastteil 419 auf dem ersten Mastteil 410 und treiben das Lastaufnahmemittel 412 mit den Lastschlitten an. Zum Zu- oder Abtransport von Stückgütern 403, 404 sind zwei beispielhaft dargestellte Übergabestationen 405, 406 im Lagerregal 401 angeordnet, in dem vor der Zeichenebene nicht dargestellte Lagerregal sind ebenso Übergabestationen angeordnet.

Der hintere der beiden Masten 409 dient zur Bedienung des dargestellten Lagerregals 401. Der vordere der Masten 408, mit den Mastteilen 420, 421, dient zur Bedienung des vor der Zeichenebene nicht dargestellten Lagerregals mit Lastaufnahmemittel 413.

Weiterhin ist vor dem Lagerregal 401 eine Störkontur 424, wie beispielsweise ein Bauwerk, angeordnet. Das Regalbediengerät 402 kann durch entsprechendes Schwenken und Verfahren des zweiten Mastteils 419, 421 und des Lastaufnahmemittels 412, 413 diese Störkontur 426 umfahren und damit an die Störkontur 424 angrenzende Positionen im Lagerregal 401 bedienen.

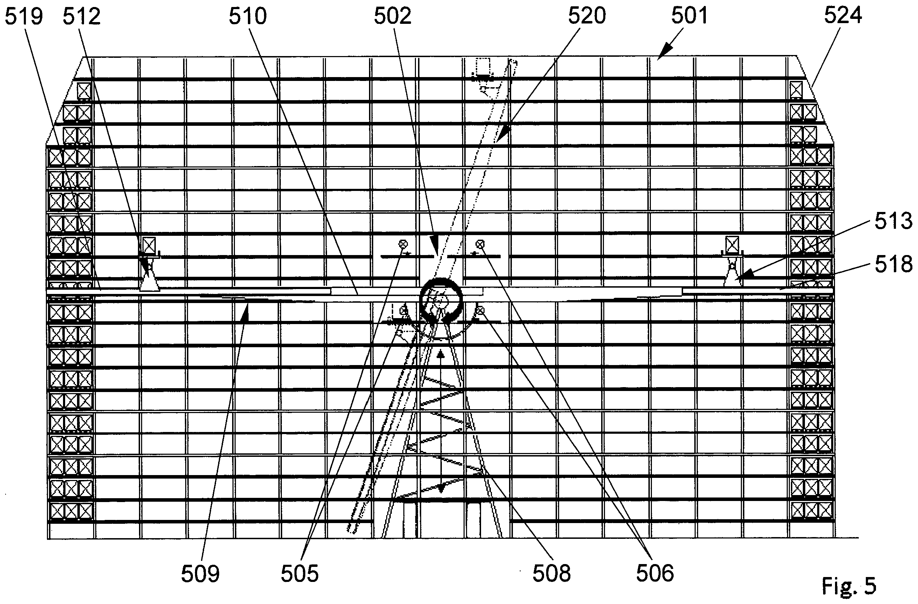

Figur 5 zeigt ein wie das aus Figur 4 in einer Lagergasse vor einem Lagerregal 501 angeordnetes Regalbediengerät 502 mit einem Mast 509, welcher sich aus mindestens drei Mastteilen 510, 519, 518 zusammensetzt. Ein mittleres Mastteil 510 ist mittig auf einem Sockel 508 gelagert. Die anderen Mastteile 519, 518 sind teleskopartig aus dem mittigen Mastteil 510 herausfahrbar und weisen, wie in Figur 1 beschrieben, Lastaufnahmemitteln 512, 513 auf. Nahe der Lagerung des Mastes 509 sind im Lagerregal 501 und in dem vor der Zeichenebene nicht dargestellten Lagerregal die Übergabestationen 505, 506 angeordnet. Diese Übergabestationen 505, 506 können die Stückgüter über Senkrechtförderer z. B. auf das Niveau der Bearbeitungsorte übergeben und an beliebige Fördereinrichtungen, wie beispielsweise Bodenbahnen und Stetigförderer angebunden werden. Die Bearbeitungsorte können somit vor der Zeichenebene positioniert werden und sind auf kurzem Wege erreichbar.

Bei einem im Vergleich zu den Stückgütern doppelt so tiefen Abstand zwischen den Lagerregalen, wie auch unter Fig. 04 beschrieben ist, dient der hintere der beiden Masten 509 zur Bedienung des dargestellten Lagerregals 501. Der vordere der Masten 520 dient zur Bedienung des vor der Zeichenebene nicht dargestellten Lagerregals.

Das Lagerregal 501 hat beispielsweise von einem Dach eines Gebäudes eingebrachte Störkonturen 524. Durch eine entsprechende Verschwenkung des Mastes 509 und ein entsprechendes Aus- und Einfahren der Mastteile 519, 518 und Verfahren der Lastaufnahmemittel 512, 513 lassen sich unmittelbar an die Störkontur 524 angrenzende Positionen des Lagerregals 501 bedienen.

Figur 6 zeigt ein Lagerregal 601 mit einem Regalbediengerät 602, bei dem auf einem Sockel 608 zwei Masten 609, 609' schwenkbar gelagert sind. Jeder der Masten 609, 609' hat zwei teleskopartig verschiebbare Mastteile 610, 619 und 620, 621 und jeweils zwei Lastaufnahmemittel 612, 612' und 613, 613'. Die Lastaufnahmemittel 612, 612', 613, 613' sind wie in Figur 1 beschrieben, mit Lastschlitten ausgestattet. Die Masten 620, 610 verschwenken über definierte Bereiche des Lagerregals 601. In der Lagergasse abgespannte Zugmittel 625 sind als Zugseile und somit zum Schwenken der Maste 610, 620 ausgelegt. Nicht dargestellte Tragrollen, sind auf beiden Seiten des Regalbediengerätes 602 am Lagerregal 601 vorgesehen und führen die Masten 609, 609' zusätzlich. Übergabestationen 605, 605' und 606, 606' zur Übergabe der Stückgüter 603, 603', 604, 604' sind unmittelbar am Sockel 608, nahe am Boden des Lagerregals 601 angeordnet.

Eine schematisch dargestellte Antriebseinrichtung 611 verschwenkt die Masten 609, 609'. Weitere Antriebseinrichtungen verfahren das zweite Mastteil 619, 621 auf dem ersten Mastteil 610, 620. Entlang des ersten Mastteils 610, 620 werden die Lastaufnahmemittel 612, 612' angetrieben. Auf den zweiten Mastteilen 612, 619, werden die Lastaufnahmemittel 612, 613 angetrieben.

Sich in der Zeichnung um den Faktor 100 unterscheidende Bezugszeichen entsprechen gleichartigen Bauteilen.

Die dargestellten Prinzipien können natürlich der Aufgabenstellung entsprechend kombiniert werden.

## Patentansprüche

1. Regalbediengerät (2) für ein Lagerregal (1), insbesondere eines automatischen Hochregallagers oder Kleinteilelagers, mit einem Mast (9, 10), mit einem auf dem Mast (9, 10) angeordneten Lastaufnahmemittel (12, 13), mit einer Antriebseinrichtung (11) zur Bewegung der Lastaufnahmemittel (12, 13) zu verschiedenen Positionen an dem Lagerregal (1), **dadurch gekennzeichnet, dass** der Mast (9) auf einem feststehenden Sockel (8) schwenkbar gelagert ist und die Antriebseinrichtung (11) zur Verschwenkung des Mastes (9) ausgebildet ist und dass die Lastaufnahmemittel (12, 13) entlang des Mastes (9) verfahrbar sind, während der Mast (9) gleichzeitig verschwenkbar ist.

2. Regalbediengerät nach Anspruch 1, **dadurch gekennzeichnet, dass** in unmittelbarer Nähe des Sockels (8) eine Übergabestation (5, 6) zum Transport von Stückgütern (3, 4) von dem Lagerregal (1) weg oder zu diesem hin angeordnet ist.

3. Regalbediengerät nach einem der Ansprüche 1 bis 2, **dadurch gekennzeichnet, dass** der Mast (9) gegeneinander verschiebbare Mastteile (10, 18, 19 - 21) hat.

4. Regalbediengerät nach einem der Ansprüche 1 bis 3, **dadurch gekennzeichnet, dass** der Mast (309) zwei in einem Parallelogramm parallel zueinander angeordnete Mastteile (318 - 321) hat.

5. Regalbediengerät nach einem der Ansprüche 1 bis 4, **dadurch gekennzeichnet, dass** der Mast (309) und die verschiebbaren Mastteile (318 - 321) Transportbänder 322, 323) zum kontinuierlichen Transport der Stückguter (303) aufweisen.

6. Regalbediengerät nach einem der Ansprüche 1 bis 5, **dadurch gekennzeichnet, dass** die schwenkbare Lagerung nahe oder an einem Ende des Mastes (109, 209, 209', 309, 310) angeordnet ist.

7. Regalbediengerät nach einem der Ansprüche 1 bis 6, **dadurch gekennzeichnet, dass** die schwenkbare Lagerung in einem mittleren Bereich des Mastes (409, 509) angeordnet ist.

8. Regalbediengerät nach einem der Ansprüche 1 bis 7, **dadurch gekennzeichnet, dass** zumindest zwei Masten (9, 9') für unterschiedliche Bereiche des Lagerregals (1) vorgesehen sind.

9. Regalbediengerät nach dem Anspruch 8, **dadurch gekennzeichnet, dass** die zumindest zwei Masten (209, 219', 409, 409', 509) auf einem gemeinsamen Sockel (208, 408, 508) gelagert sind.

10. Regalbediengerät nach dem Anspruch 8, **dadurch gekennzeichnet, dass** die zumindest zwei Masten (309, 310) auf einander gegenüberliegenden Sockeln (308, 308') gelagert sind.

11. Regalbediengerät nach einem der Ansprüche 1 bis 10, **dadurch gekennzeichnet, dass** die Masten (609, 609') zu ihrer Verschwenkung über Zugmittel (625) mit einer Antriebseinrichtung (611) verbunden sind.

## Claims

1. A storage and retrieval device (2) for a storage shelf (1), in particular an automatic high shelf warehouse or small-parts warehouse, with a mast (9, 10), with a load handling means (12, 13) arranged on the mast (9, 10), with a drive device (11) for moving the load handling means (12, 13) into different positions on the storage shelf (1), **characterized in that** the mast (9) is pivotably mounted on a fixed base (8) and the drive device (11) is designed for pivoting the mast (9) and that the load handling means (12, 13) can be moved along the mast (9), while the mast is at the same time pivotable.

2. A storage and retrieval device according to Claim 1, **characterized in that** within close proximity to the base (8) a delivery station (5, 6) is arranged for transporting piece goods (3, 4) away from the storage shelf (1) or towards the latter.

3. A storage and retrieval device according to any one of Claims 1 to 2, **characterized in that** the mast (9) has mutually displaceable mast parts (10, 18, 19-21).

4. A storage and retrieval device according to any one of Claims 1 to 3, **characterized in that** the mast (309) has two mast parts (318 - 321) arranged in a parallelogram parallel to one another.

5. A storage and retrieval device according to any one of Claims 1 to 4, **characterized in that** the mast (309) and the displaceable mast parts (318 - 321) have transport belts (322, 323) for continuous transport of the piece goods (303).

6. A storage and retrieval device according to any one of Claims 1 to 5, **characterized in that** the pivotable bearing is arranged close to or at an end of the mast (109, 209, 209', 309, 310).

7. A storage and retrieval device according to any one of Claims 1 to 6, **characterized in that** the pivotable bearing is arranged in a central region of the mast (409, 509).

8. A storage and retrieval device according to any one of Claims 1 to 7, **characterized in that** at least two masts (9, 9') are provided for different regions of the storage shelf (1).

9. A storage and retrieval device according to Claim 8, **characterized in that** the at least two masts (209, 219', 409, 409', 509) are mounted on a common base (208, 408, 508).

10. A storage and retrieval device according to Claim 8, **characterized in that** the at least two masts (309, 310) are mounted on mutually opposite bases (308, 308').

11. A storage and retrieval device according to any one of Claims 1 to 10, **characterized in that** the masts (609, 609') are connected for their pivoting to a drive device (611) by means of traction means (625).

## Revendications

1. Dispositif de commande d'étagère (2) pour une étagère de stockage (1), plus particulièrement d'un stockage à étagère haute ou d'un stockage de petites pièces, avec un mât (9, 10), avec un moyen de logement de charge (12, 13) disposé sur le mât (9, 10), avec un dispositif d'entraînement (11) pour le déplacement des moyens de logement de charges (12, 13) vers différentes positions sur l'étagère de stockage (1), **caractérisé en ce que** le mât (9) est logé de manière pivotante sur un socle fixe (8) et le dispositif d'entraînement (11) est conçu pour le pivotement du mât (9) et **en ce que** les moyens de logement de charges (12, 13) peuvent être déplacés le long du mât (9) tandis que le mât (9) peut être pivoté simultanément.

2. Dispositif de commande d'étagère selon la revendication 1, **caractérisé en ce que**, à proximité immédiate du socle (8), une station de transfert (5, 6) est disposée pour le transport d'articles (3, 4) loin de l'étagère de stockage (1) ou vers celle-ci.

3. Dispositif de commande d'étagère selon l'une des revendications 1 à 2, **caractérisé en ce que** le mât (9) comprend des parties de mât (10, 18, 19 - 21) coulissant l'une contre l'autre.

4. Dispositif de commande d'étagère selon l'une des revendications 1 à 3, **caractérisé en ce que** le mât (309) comprend deux parties de mât (318 - 321) disposées parallèlement entre elles dans un parallélogramme.

5. Dispositif de commande d'étagère selon l'une des revendications 1 à 4, **caractérisé en ce que** le mât (309) et les parties de mât coulissantes (318 - 321) comprennent des bandes de transport (322, 323) pour le transport en continu des articles (303).

6. Dispositif de commande d'étagère selon l'une des revendications 1 à 5, **caractérisé en ce que** le palier pivotant est disposé près ou au niveau d'une extrémité du mât (109, 209, 209', 309, 310).

7. Dispositif de commande d'étagère selon l'une des revendications 1 à 6, **caractérisé en ce que** le palier pivotant est disposé dans une zone centrale du mât 409, 509).

8. Dispositif de commande d'étagère selon l'une des revendications 1 à 7, **caractérisé en ce qu'**au moins deux mâts (9, 9') sont prévus pour des zones différentes de l'étagère de stockage (1).

9. Dispositif de commande d'étagère selon la revendication 8, **caractérisé en ce que** les au moins deux mâts (209, 209', 409, 409', 509) sont logés sur un socle commun (208, 408, 508).

10. Dispositif de commande d'étagère selon la revendication 8, **caractérisé en ce que** les au moins deux mâts (309, 310) sont logés sur des socles opposés (308, 308').

11. Dispositif de commande d'étagère selon l'une des revendications 1 à 10, **caractérisé en ce que** les mâts (609, 609') sont reliés, pour leur pivotement par l'intermédiaire de moyens de traction (625), avec un dispositif d'entraînement (611).
